# EUROPÄISCHE PATENTSCHRIFT

(11) **EP 1 066 635 B1**
(45) Veröffentlichungstag und Bekanntmachung des Hinweises auf die Patenterteilung: **06.04.2005**
(21) Anmeldenummer: 97953850.1
(22) Anmeldetag: 18.12.1997
(51) Int. Cl.: G11B 23/03, G11B 17/22

(54) **MAGAZIN FÜR MAGNETO-OPTISCHE SPEICHERMEDIEN FÜR EIN MODULARES MASSENSPEICHERSYSTEM**
MAGAZINE FOR MAGNETO-OPTICAL STORAGE MEDIA FOR A MODULAR MASS-STORAGE SYSTEM
MAGASIN POUR SUPPORTS DE DONNEES MAGNETO-OPTIQUE POUR SYSTEME DE MEMOIRE DE MASSE MODULAIRE

(30) Priorität: 11.01.1997 DE 19700741
(43) Veröffentlichungstag der Anmeldung: 10.01.2001
(73) Patentinhaber: Grundig Multimedia B.V., 1083HJ Amsterdam (NL)
(72) Erfinder: LANGETHAL, Olaf, D-07589 Münchenbernsdorf (DE); RIEBOLD, Dietmar, D-07546 Gera (DE); SCHULZ, Ralph-Michael, D-07549 Gera (DE)
(74) Vertreter: Pröll, Jürgen
(86) Internationale Anmeldenummer: PCT/EP1997/007114
(87) Internationale Veröffentlichungsnummer: WO 1998/031013

(56) Entgegenhaltungen:
- EP-A- 0 138 005
- EP-A- 0 139 327
- WO-A-93/08569
- DE-A- 3 521 913
- DE-A- 4 005 058
- DE-A- 4 205 912
- DE-A- 4 319 551
- DE-A- 4 327 413
- DE-A- 4 431 917
- US-A- 4 800 554

## Beschreibung

Die Erfindung betrifft ein Magazin für magneto-optische Speichermedien für ein modulares Massenspeichersystem, bei welchem die magneto-optischen Speichermedien, die insbesondere Compact-Discs sind, ohne Caddy in das Compact-Disc-Magazin eingelegt werden.

Aus DE 42 36 596 ist ein Compact-Disc-Magazin für eine Compact-Disc-Wechselvorrichtung bekannt. Hierbei ist das Compact-Disc-Magazin mit einem Gehäuse versehen, das zugleich das Gehäuse für die Compact-Discs bildet und eine Öffnung zum Auswerfen und Einsetzen der Compact-Discs aufweist. Das Compact-Disc-Magazin weist eine Mehrzahl von in dem Gehäuse übereinander angeordneten Fachböden auf, zwischen welchen Zwischenräume ausgebildet sind, in welche die Compact-Discs übereinander eingeschoben werden können. Außerdem weist das Compact-Disc-Magazin eine Compact Disc-Festhalteeinrichtung auf, welche auf jedem Fachboden ausgebildet ist, um die Compact-Disc zu positionieren und festzuhalten. Des weiteren ist eine Compact-Disc-Auswerfeinrichtung mit einem schwenkbaren Auswerfhebel vorgesehen, um die mittels der Festhalteeinrichtung gehaltenen und positionierten Compact-Discs durch die Öffnung im Gehäuse auswerfen zu können. Die Compact-Disc-Festhalteeinrichtung ist mit mindestens drei Gleitschlitten versehen, weiche im Abstand zueinander in einer vorbestimmten Winkellage angeordnet sind und innerhalb eines vorbestimmten Bereichs in Radialrichtung hin und her bewegbar sind, wobei die Schlitten auf einen Zielbereich zubewegbar sind. Dieser Zielbereich befindet sich im vorderen Bereich des Fachbodens. Jeder der Schlitten ist mit einer Stützplatte an seinem Ende versehen.

DE 4 319 551 beschreibt ein Compact-Disc-Magazin gemäß dem Oberbegriff des Anspruchs 1.

Die Erfindung ist in Anspruch 1 definiert.

Vorteilhafte Ausgestaltungen der Erfindung sind in den abhängigen Ansprüchen gegeben.

Eine Vorteil nach Anspruch 2 ergibt sich dadurch, daß im Gehäuse Nuten angeordnet sind. in welchen die Magazinschubladen im Gehäuse führen.

Ein ein weiterer Vorteil nach Anspruch 3 ergibt sich daraus, daß am Gehäuse Einbuchtungen vorgesehen sind, mittels denen das Gehäuse 1 im modularen Massenspeichersystem arretiert wird.

Ein Vorteil nach Anspruch 5 ergibt sich daraus, daß Bolzen, die durch Bohrungen im Gehäuse und in den Magazinschubladen eingeschoben sind, die Magazinschubladen im Gehäuse während eines Transportes fixieren.

Anspruch 6 beschreibt die vorteilhafte Ausgestaltung der Magazinschubladen.

Die Erfindung wird im folgenden an einem exemplarischen Ausführungsbeispiel für Compact-Discs anhand der Zeichnungen erläutert.

Es zeigen:
- Fig. 1: eine Ansicht des Compact-Disc-Magazins schräg von vorne,
- Fig. 2: eine Frontalansicht des Compact-Disc-Magazins,
- Fig. 3: eine Ansicht des Compact-Disc-Magazins von der Seite,
- Fig. 4: eine Ansicht des Compact-Disc-Magazins von oben,
- Fig. 5: eine Schnittansicht des Compact-Disc-Magazins von oben,
- Fig. 6: eine Ansicht des Compact-Disc-Magazins von hinten und
- Fig. 7: eine Magazinschublade des Compact-Disc-Magazins.

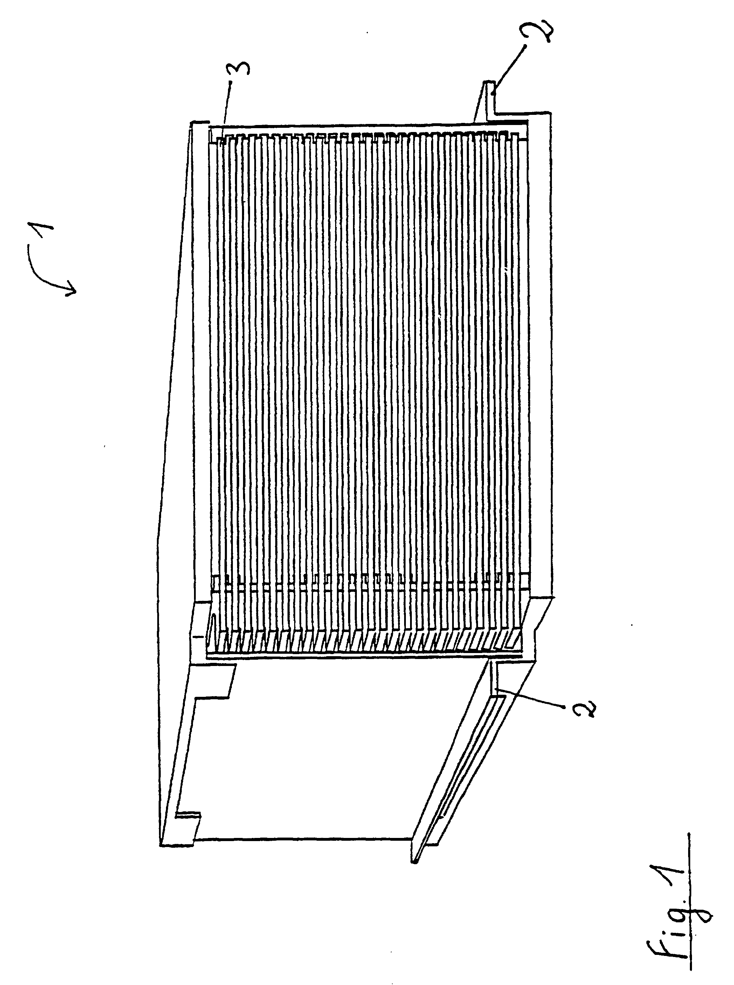

Das Ausführungsbeispiel ist keine erschöpfende Aufstellung der erfindungsgemäßen Ausgestaltungsmöglichkeiten, sondern hat nur beispielhaften Charakter.
Das Compact-Disc-Magazin. wie es in den Fig. 1 bis 6 dargestellt ist, weist folgende Bestandteile auf:
Ein Gehäuse 1, beidseitig am unteren Teil des Gehäuses 1 angebrachte Führungsschienen 2, Magazinschubladen 3 zur Aufnahme von Compact-Discs, seitlich im Gehäuse 1 angebrachte Nuten 5, einen Griff 6, eine Einbuchtung 7, seitliche Führungen 8, Bohrungen 9 und eine Einbuchtung 11.

Die beidseitig seitlich am unteren Teil des Gehäuses 1 angebrachten Führungsschienen 2 haben die Aufgabe, das Compact-Disc-Magazin beim Einschieben in das modulare Massenspeichersystem zu führen. Hierdurch wird gewährleistet. daß das Compact-Disc-Magazin beim Einschieben stets eine definierte Position einnimmt.
In das Gehäuse 1 sind einzelne Magazinschubladen 3 eingeschoben, welche zur Aufnahme von Compact-Discs dienen. Diese Magazinschubladen 3 sind in der Weise angebracht, daß sie aus dem Gehäuse 1 herausgezogen und wieder eingeschoben werden können. Die Magazinschubladen 3 sind in dem Gehäuse 1 horizontal übereinander angeordnet. Jede Magazinschublade 3 ist zur Aufnahme einer Compact-Disc ohne Caddy vorgesehen.

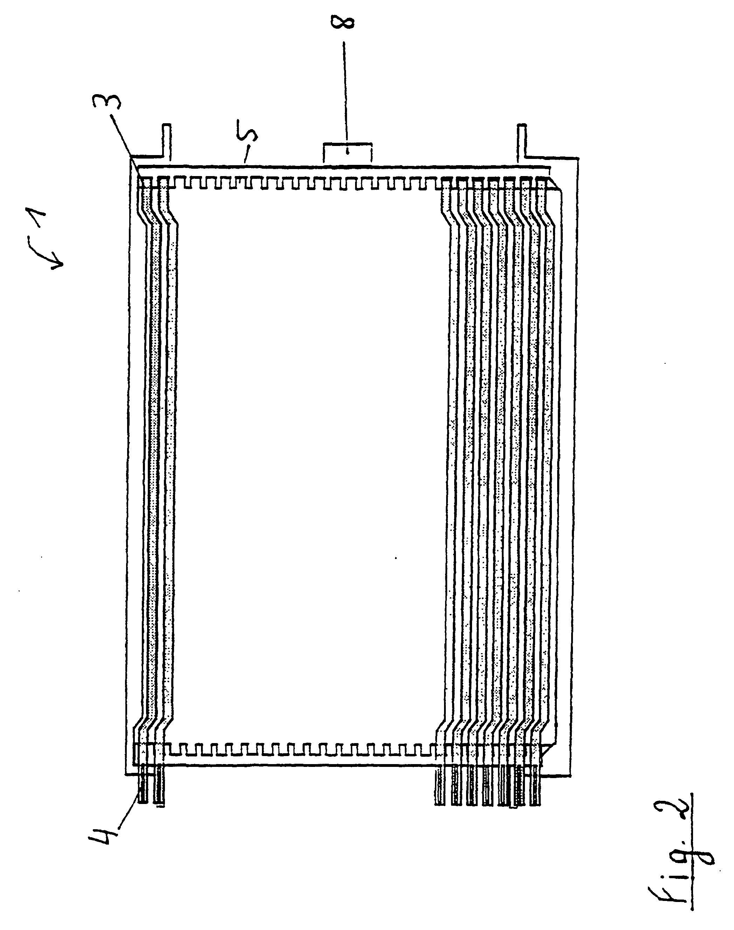

Anhand von Fig. 2, die eine Frontansicht des Compact-Disc-Magazins darstellt, wird der Aufbau des Compact-Disc-Magazins nochmals näher erläutert. Die Nuten 5, weiche an den Innenseiten der Seitenwände des Gehäuses 1 angebracht sind, reichen von der Front- bis zur Rückseite des Gehäuses 1, parallel zu den Seitenwänden. Die Nuten 5 dienen den Magazinschubladen 3 als Führung im Gehäuse 1. Die Nuten 5 weisen eine Größe auf, die es gewährleistet, daß die Magazinschubladen 3 in diesen Nuten 5 geführt werden können. Um ein besseres Gleiten der Magazinschubladen 3 in den Nuten 5 zu ermöglichen, sind die Nuten 5, sowie die Magazinschubladen 3, an den Flächen, an denen zwischen beiden eine Berührung stattfindet, mit einem Material beschichtet, das die Reibung minimiert. Hierdurch wird erreicht, daß die Reibung zwischen den Magazinschubladen 3 und den Nuten 5 des Gehäuses 1 verringert wird, wodurch sich die Magazinschubladen 3 leichtgängig in den Nuten 5 bewegen.

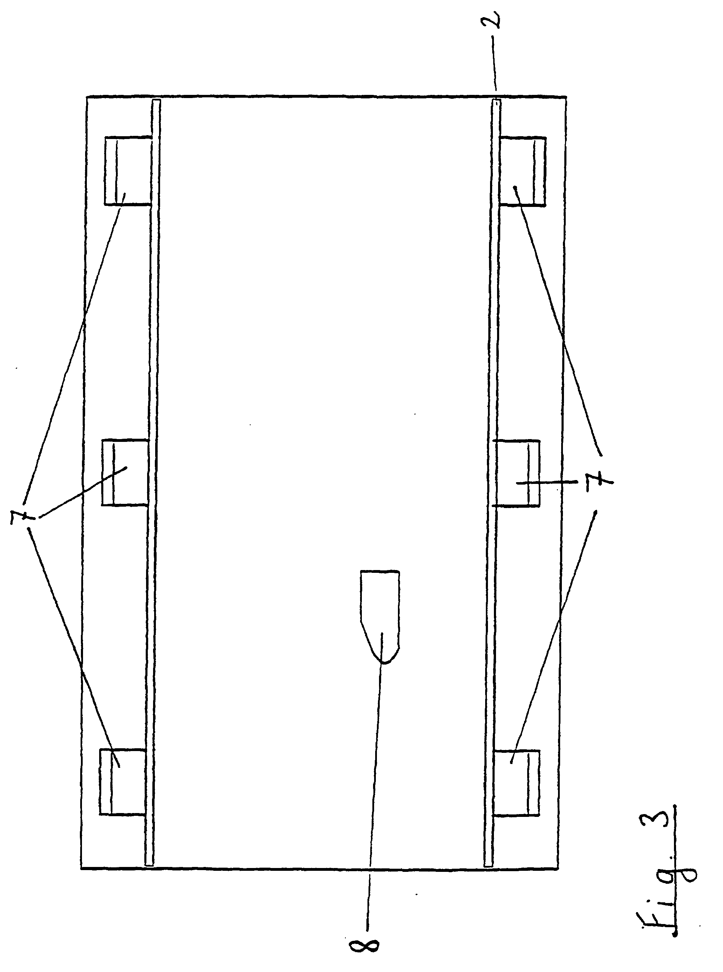

Anhand von Fig. 3 wird der Aufbau einer Seitenwand des Gehäuses 1 verdeutlicht. Am Gehäuse 1 sind am oberen und unteren Rand Einbuchtungen 7 vorhanden. Diese Einbuchtungen 7 dienen dazu. das Gehäuse 1 im modularen Massenspeichersystem zu arretieren. Hierdurch wird gewährleistet, daß das in das modulare Massenspeichersystem eingeschobene Gehäuse 1 stets eine konkret vordefinierte Position einnimmt. Zugleich wird über Sensoren, die im modularen Massenspeichersystem bei oder In oder an den Gegenstücken zu den Einbuchtungen 7 des Gehäuses 1 angeordnet sind, festgestellt, ob sich ein Compact-Disc-Magazin im modularen Massenspeichersystem befindet.

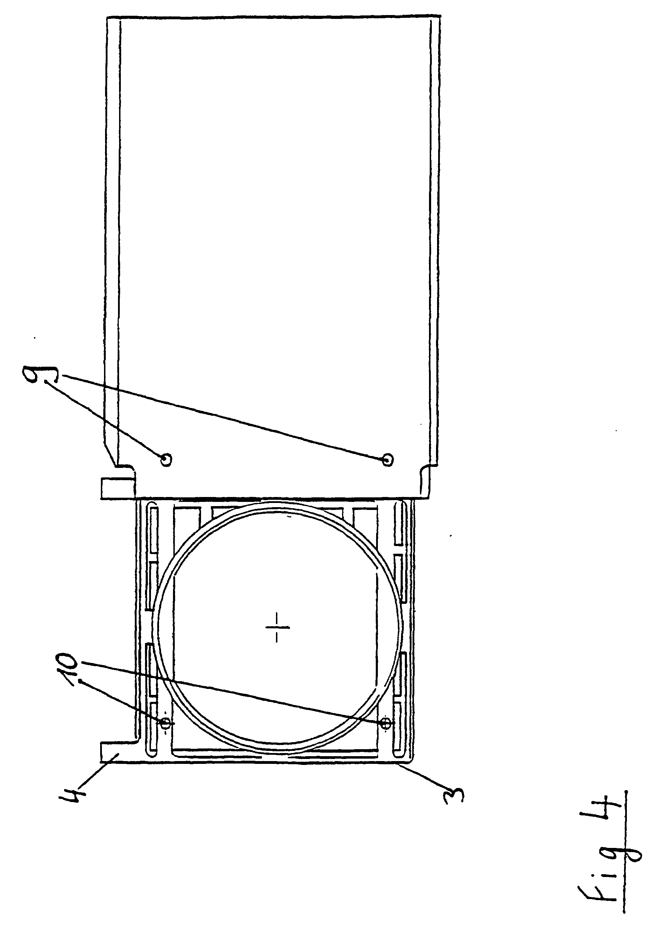

Im weiteren weist das Gehause 1 seitlich eine Führung 8 auf. Die Führung 8 ist quaderförmig und an der Seite des Gehäuses 1 angebracht. Die Größe der Führung 8 ist derart gewählt, daß sie nicht über die seitliche untere Führungsschiene 2 hinausragt. Die Führung 8 ist dafür vorgesehen. dem Gehäuse 1 beim Einschieben in das modulare Massenspeichersystem eine Führung zu geben. Im modularen Massenspeichersystem ist als Gegenstück zur Führung 8 eine Nut vorgesehen. in welcher die Führung 8 beim Einsetzten in das modulare Massenspeichersystem gleitet und geführt wird. Die Formgebung der Führung 8, in Form einer parabolischen Abflachung an der Frontseite, hat sich als besonders vorteilhaft erwiesen. Anhand von Fig. 4 sind Bohrungen 9 im Gehäuse ersichtlich. Diese Bohrungen 9 sind angebracht, um Bolzen durch diese Bohrungen zu führen. Die Magazinschubladen 3 weisen Bohrungen 10 auf. Die Bohrungen 9 und 10 haben den gleichen Durchmesser und die Zentren der Bohrungen 9 und 10 stimmen im eingeschobenen Zustand der Magazinschubladen 3 überein, das heißt die Bohrungen 9 und 10 liegen zentrisch übereinander. Wird im eingeschobenen Zustand aller Magazinschubladen 3 ein bzw. mehrere Bolzen durch die Bohrungen 9 eingeschoben, so werden die Bolzen auch durch die Bohrungen 10 der Magazinschubladen 3 geführt, wodurch diese im Gehäuse 1 fixiert und festgehalten werden. Hierdurch ist eine einfache Möglichkeit gegeben, die Magazinschubladen 3 im Gehäuse 1 zu arretieren. Zugleich sind die Bohrungen 10 derart angebracht, daß eine in eine Magazinschublade 3 eingelegte Compact-Disc, bei eingeschobenen Bolzen, nicht nach vorne aus der Magazinschublade 3 herausgleiten kann, unabhängig von der Lage oder Position des Gehäuses 1. Diese Art der Fixierung hat sich als besonders vorteilhaft beim Transport des Gehäuses 1 erwiesen, denn weder die Magazinschubladen 3 noch darin eingelegte Compact-Discs können beim Transport aus dem Gehäuse 1 herausrutschen. Vor dem Einführen des Gehäuses 1 in ein modulares Massenspeichersystem muß allerdings überprüft werden, daß sich keine Bolzen in den Bohrungen 9 und 10 befinden, andernfalls lassen sich die Magazinschubladen 3 nicht öffnen. Als eine Vorkehrung hierzu hat es sich als vorteilhaft erwiesen, die Bohrungen 9 und 10 mittels eines optischen Sensors im modularen Massenspeichersystem zu überwachen um festzustellen, ob sich noch ein Bolzen in den Bohrungen 9 und 10 befindet.

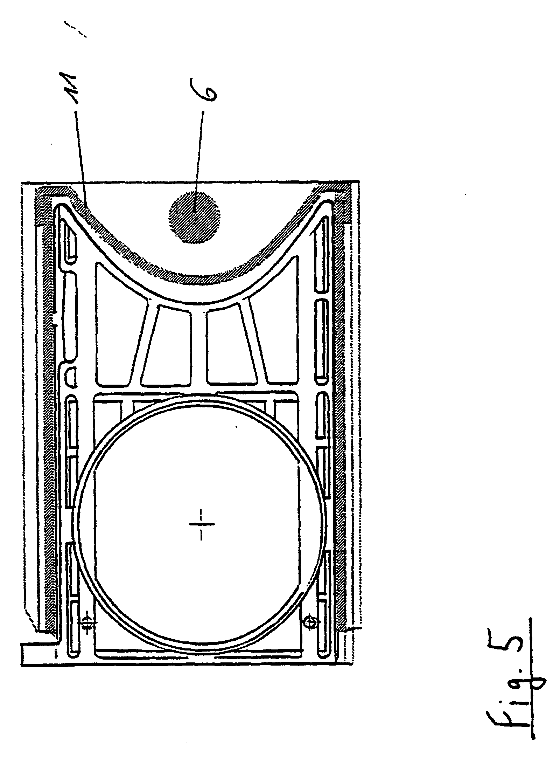

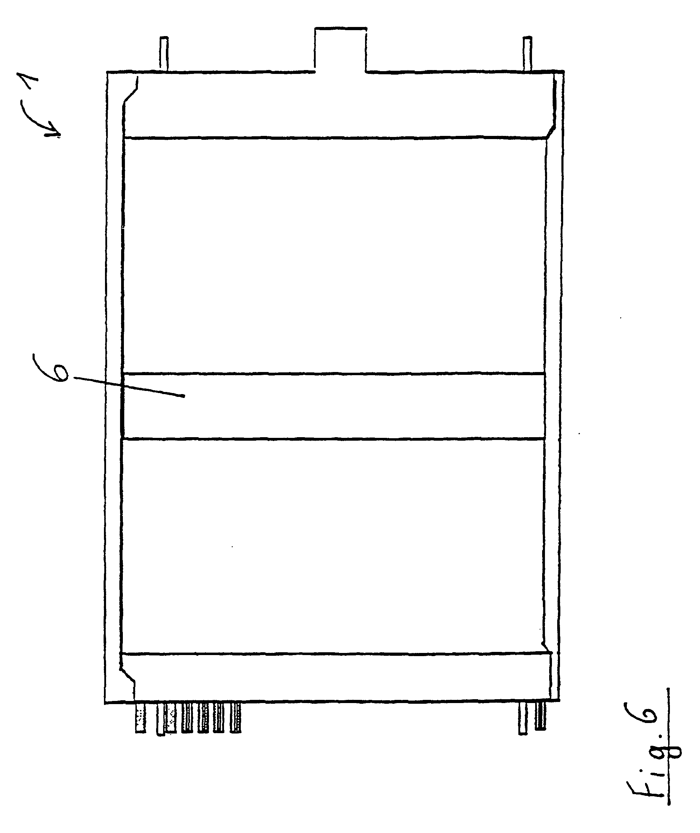

Anhand Fig. 5 und Fig. 6 ist aufgezeigt, daß das Gehäuse 1 auf der Rückseite eine Einbuchtung 11 und einen Griff 6 aufweist. Dieser Griff 6 ist derart gestaltet, daß es problemlos möglich ist, das Gehäuse 1 mit einer Hand zu ergreifen. Der Griff 6 ist in das Gehäuse 1 integriert und mit dem Gehäuse 1 verbunden. Der Griff 6 schließt mit der Rückseite des Gehäuses 1 ab. Außerdem weist der Griff 6, in vorteilhafter Ausgestaltung, auf der dem Gehäuse 1 zugewandten Seite vier Einschnürungen auf, welche eine

Auflage für die vier Finger bilden. die beim Greifen mit einer Hand den Griff 6 umschließen.
Die Einbuchtung 11 erstreckt sich über den gesamten hinteren Teil des Gehäuses 1 und ist derart gestaltet. daß beim Greifen um den Griff 6 die Finger der Hand nicht an das Gehäuse 1 stoßen. Hierdurch ist das Gehäuse 1 besonders benutzerfreundlich gestaltet. Die Einbuchtung 11 ist in Form eines Kreissegmentes ausgebildet.
Die Einbuchtung 11 ist derart ausgestaltet, daß beim Ergreifen des Magazins am Griff 6, mit einer Hand problemlos um den Griff 6 gegriffen werden kann. Hierdurch ist es möglich das Compact-Disc-Magazin mit nur einer Hand aus dem modularen Massenspeichersystem zu entnehmen, es einzusetzen oder zu transportieren.

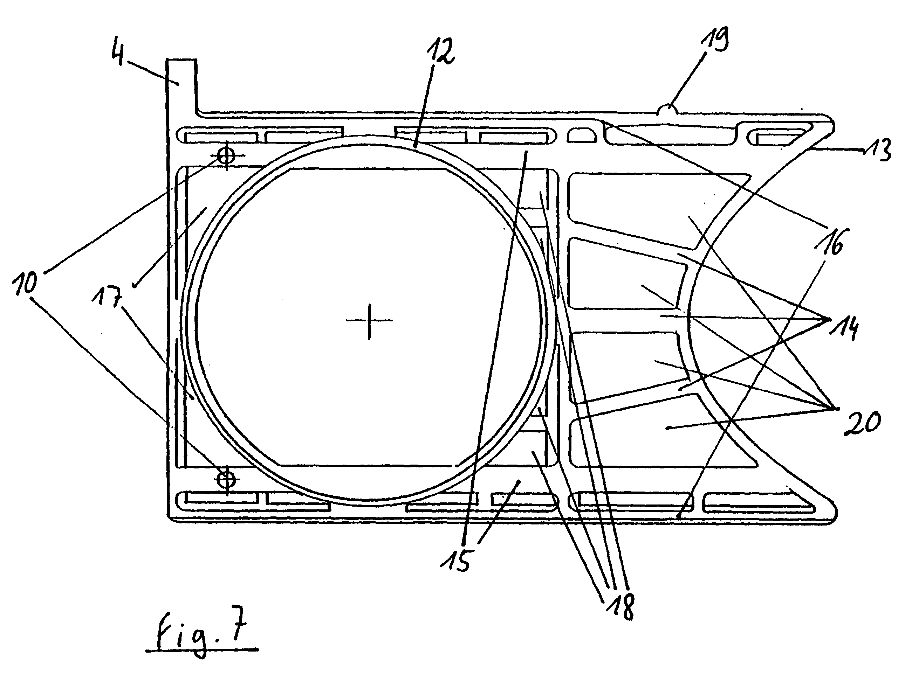

Anhand Fig. 7 wird der Aufbau einer Magazinschublade 3 näher beschrieben. Die Magazinschublade 3 weist eine Nase 4, die Bohrungen 10, einen Rundsteg 12, eine Einbuchtung 13, Stege 14, Längsstege 15, beidseitige Längsstege 16, Aussparungen 17, 18 und 20 sowie eine weitere Nase 19 auf.

Die Nase 4 ist vorgesehen, damit die Magazinschublade 3 von außen mit einem Greifer ergriffen werden kann. Aus diesem Grunde ist die Nase 4 derart angeordnet, daß sie aus dem Gehäuse 1 herausragt und über dieses an einer Seite des Gehäuses 1 übersteht. Da die Nase 4 der Magazinschublade 3 auf einer Seite über das Gehäuse 1 hinausragt, kann ein Greifer die Magazinschublade 3 an der Nase 4 ergreifen und aus dem Gehäuse 1 herausziehen bzw. selbige wieder in das Gehäuse 1 einschieben.
Im mittleren Bereich der Magazinschublade 3 weist selbige eine Vertiefung auf. welche einen größeren Durchmesser als eine Compact-Disc aufweist. In dieser Vertiefung weist die Magazinschublade 3 einen Rundsteg 12 auf.
Dieser Rundsteg 12 ist derart konstruiert, daß eine Compact-Disc auf diesem Rundsteg 12 abgelegt werden kann. Der Rundsteg 12 ist zur Mitte hin abgeflacht, wodurch die Compact-Disc in einen definierten Zustand zu liegen kommt. Da sich der Rundsteg 12 in der Vertiefung der

Magazinschublade 3 befindet, ragt eine in die Magazinschublade 3 eingelegte, auf dem Rundsteg 12 liegende, Compact-Disc nicht über die Magazinschublade 3 hinaus. Die Compact-Disc liegt in der Vertiefung und ist somit in einer definierten Position gelagert.

Die Magazinschublade 3 weist an ihrem hinteren Ende eine Einbuchtung 13 auf. Diese Einbuchtung 13 stimmt mit der Einbuchtung 11 am Gehäuse 1 überein. Hierdurch kann die Magazinschublade 3 in ihrer gesamten Länge in das Gehäuse 1 eingeschoben werden.
Im weiteren weist das Gehäuse 1 die Stege 14 auf, welche dazu dienen, eine Stabilität der Schublade zu gewährleisten, ohne jedoch die Notwendigkeit zu geben, die Magazinschublade 3 aus Vollmaterial herstellen zu müssen. Dies führt zu einer Gewichtsreduktion der Magazinschublade 3 sowie des gesamten Compact-Disc-Magazins. Diese Gewichtsreduktion wirkt sich vorteilhaft auf die Handhabung aus. Beim Bewegen der Magazinschublade 3 mittels eines Greifers muß nur eine geringe Masse bewegt werden. Dies kann vorteilhaft beim Bau des Greifers berücksichtigt werden.

Die beidseitigen Längsstege 15 dienen dazu, der Magazinschublade 3 Stabilität zu verleihen. Zugleich sind in diese Längsstege 15 die Bohrungen 10 eingebracht.

Die Magazinschublade 3 weist seitlich jeweils einen Längssteg 16 auf. Diese Längsstege 16 dient als Gegenstücke zu den Nuten 5. Diese Längsstege 16 sind, ebenso wie die Nuten 5, mit einem Material zur Verringerung der Reibung beschichtet, um eine möglichst reibungsarme Bewegung der Magazinschublade 3 zu ermöglichen. Als vorteilhaft hat sich die Beschichtung mit Teflon erwiesen

Zur Gewichtsreduktion weist die Schublade weitere Aussparungen 17, 18 und 20 auf. Diese sind derart angeordnet, daß die Magazinschublade 3 trotz Materialaussparung stabil ist

Die Magazinschublade 3 weist eine Nase 19 auf. Diese Nase 19 ist am hinteren Teil der Magazinschublade 3 angeordnet. Sie dient dazu, daß die Schublade nicht vollends aus dem Gehäuse 1 herausgezogen werden kann. Hierzu ist im Gehäuse 1 ein seitlicher Steg angebracht, an welchem die Nase 19 anschlägt, wenn die Schublade 3 zu weit herausgezogen wird. Hierdurch wird zugleich gewährleistet, daß die Magazinschublade 3 nur bis auf eine vorgegebene Länge aus dem Gehäuse 1 herausgezogen werden kann.
Um einen möglichst langen Führungsweg der Magazinschublade 3 im Gehäuse 1 zu erhalten, ist die Schublade in der Weise konstruiert, daß die Führungsschienen 16 länger gestaltet sind, als dies dem Durchmesser einer Compact-Disc entspricht. Dies ist vorteilhaft, da sich im herausgezogenen Zustand stets noch ein Teil der Magazinschublade 3 im Innern des Gehäuses 1 befindet.

## Patentansprüche

1. Magazin für magneto-optische Speichermedien für ein modulares Massenspeichersystem. bei dem das Compact-Disc-Magazin mit einem Gehäuse (1) versehen ist. in das Gehäuse (1) mehrere Magazinschubladen (3) horizontal übereinander, in gleiche Abständen zueinander, angeordnet sind, die Magazinschubladen (3) zur direkten Aufnahme eines magneto-optische Speichermediums vorgesehen sind, wobei die Magazinschubladen (3) jeweils eine Nase (4) aufweisen, an denen die Magazinschubladen (3) mittel eines Greifers aus dem Gehäuse (1) herausgezogen und/oder in das Gehäuse (1) hineingeschoben werden, diese Nasen (4) aus dem Gehäuse (1) an einer Seite herausragen, die Magazinschubladen (3) aus dem Gehäuse (1) herausschiebbar und in das Gehäuse (1) einschiebbar sind und die Magazinschubladen in eingeschobenen Zustand mit dem Gehäuse (1 ) eine abgeschlossene einheitliche Frontseite bilden, wobei das Gehäuse einen Griff (6) hat,
**dadurch gekennzeichnet,**
- **daß** das Gehäuse (1) auf der Rückseite den Griff (6) und eine Einbuchtung (11) aufweist,
- **daß** der Griff (6) mit dem Gehäuse (1) formschlüssig verbunden ist,
- das der Griff (6) mit der Rückseite des Gehäuses (1) abschließt und
- **daß** die Einbuchtung (11) in Form eines Kreissegmentes ausgebildet ist und sich über den gesamten rückwärtigen Bereich des Gehäuses (1) erstreckt.

2. Magazin für magneto-optische Speichermedien für ein modulares Massenspeichersystem nach Anspruch 1,
**dadurch gekennzeichnet,**
- **daß** beidseitig im Gehäuse (1) Nuten (5) in horizontaler Ebene angeordnet sind.
- die Nuten (5) der Führung der Magazinschubladen (3) im Gehäuse (1) dienen und
- **daß** die Nuten (5) mit einem Material zur Verringerung der Reibung beschichtet sind, um die Reibungszahl zwischen den Nuten (5) und den Magazinschubladen (3) zu verringern.

3. Magazin für magneto-optische Speichermedien für ein modulares Massenspeichersystem nach Anspruch 1 oder 2,
**dadurch gekennzeichnet,**
- **daß** seitlich am Gehäuse (1) Einbuchtungen (7) vorgesehen sind, die zur Arretierung des Gehäuses (1) im modularen Massenspeichersystem dienen,
- **daß** seitlich am Gehäuse (1) eine Führung (8) angeordnet ist, die eine Führung des Gehäuses (1) beim Einsetzen des Magazins für magneto-optische Speichermedien in den modularen Massenspeicher bewirkt,
- **daß** im modularen Massenspeicher Gegenstücke zu den Einbuchtungen (7) am Gehäuse (1) vorhanden sind, in denen die Einbuchtungen (7) beim Einschieben des Gehäuses (1) in den modularen Massenspeicher einrasten. und
- **daß** in modularen Massenspeicher eine Nut vorhanden ist, in welcher die Führung (8) des Magazins für magneto-optische Speichermedien beim Enführen des Magazins für magneto-optische Speichermedien in den modularen Massenspeicher gleitet.

4. Magazin für magneto-optische Speichermedien für ein modulares Massenspeichersystem nach einem der Ansprüche 1 bis 3,
**dadurch gekennzeichnet,**
**daß** die Führung (8) quaderförmig ausgestattet ist und in Einschubrichtung in den modularen Massenspeicher parabolisch abgeflacht ist.

5. Magazin für magneto-optische Speichermedien für ein modulares Massenspeichersystem nach einem der Ansprüche 1 bis 4,
**dadurch gekennzeichnet,**
- **daß** das Gehäuse (1) Bohrungen (9) und die Magazinschubaden (3) Bohrungen (10) aufweisen,
- **daß** diese Bohrungen (9) und (10) den gleichen Durchmesser haben,
- **daß** im eingeschobenen Zustand der Magazinschubladen (3) in das Gehäuse (1), die Zentren der Bohrungen (9) und (10) zentrisch übereinander angeordnet sind,
- **daß** durch die Bohrungen (9) und (10) Bolzen eingeschoben werden, die eine Arretierung der Magazinschubladen (3) im Gehäuse (1) bewirken und
- **daß** bei eingeschobenen Bolzen die magneto-optischen Speichermedien, die sich in den Magazinschubladen (3) befinden, vor dem Herausfallen aus selbigen, beim Transport des Magazins für magneto-optische Speichermedien, geschützt sind.

6. Magazin für magneto-optische Speichermedien für ein modulares Massenspeichersystem nach einem der Ansprüche 1 bis 5,
**dadurch gekennzeichnet,**
- **daß** die Magazinschubladen (3) eine Vertiefung aufweisen, in welcher ein Rundsteg (12) angeordnet ist, der zur Mitte hin abgeflacht ist,
- **daß** ein in eine Magazinschublade (3) eingelegtes magneto-optisches Speichermedium auf diesem Rundsteg (12) zu liegen kommt,
- **daß** die Magazinschubladen (3) auf der Rückseite Einbuchtungen (13) aufweisen, die mit der Einbuchtung (11) am Gehäuse (1) formschlüssig übereinstimmen,
- **daß** die Magazinschubladen (3) Längsstege (16) aufweisen, welche als Gegenstüche zu den Nuten (5) des Gehäuses (1) dienen,
- **daß** die Längsstege (16) mit einem Material zur Verringerung der Reibung beschichtet sind und
- **daß** die Magazinschubladen (3) eine Nase (19) aufweisen, welche beim Herausziehen der Magazinschubladen (3) an einen Steg im Gehäuse (1) anstoßen und so verhindert wird, daß die Magazinschubladen (3) vollkommen aus dem Gehäuse (1) herausgezogen werden können.

7. Magazin für magneto-optische Speichermedien für ein modulares Massenspeichersystem nach einem der Ansprüche 1 bis 6,
**dadurch gekennzeichnet, daß**
das Material zur Verringerung der Reibung Teflon ist.

8. Magazin für magneto-optische Speichermedien für ein modulares Massenspeichersystem nach einem der Ansprüche 1 bis 7,
**dadurch gekennzeichnet,**
- **daß** beidseitig seitlich am unteren Teil Gehäuses (1) jeweils eine Führungsschiene (2) angebracht ist und
- **daß** in modularen Massenspeicher jeweils eine Nut vorhanden ist, in welche die Führungsschiene (2) eingesetzt wird und darin in das modulare Massenspeichersystem geführt wird.

9. Magazin für magneto-optische Speichermedien für ein modulares Massenspeichersystem nach einem der Ansprüche 1 bis 8,
**dadurch gekennzeichnet,**
**daß** die magneto-optischen Speichermedien Compact-Discs sind.

## Claims

1. Magazine for magneto-optical storage media for a modular mass storage system in which the compact-disc magazine is provided with a casing (1), a plurality of magazine drawers (3) is disposed in the casing (1) horizontally one above the other, at equal distances from one another, the magazine drawers (3) are provided for the direct reception of a magneto-optical storage medium, wherein the magazine drawers (3) each have a lug (4) at which the magazine drawers (3) can be pulled out of the casing (1) by means of a gripping device and/or pushed into the casing (1), said lugs (4) project out of the casing (1) at one side, the magazine drawers (3) can be pushed out of the casing (1) or pushed into the casing (1) and the magazine drawers form with the casing (1) a flush, uniform front side in the pushed-in state, wherein the casing has a grip (6),
**characterized**
- **in that** the casing (1) has at the rear side the grip (6) and a recess (11),
- **in that** the grip (6) is joined to the casing (1) in a shape-locked way,
- **in that** the grip (6) is flush with the rear side of the casing (1),
- **in that** the recess (11) is designed in the shape of a circular segment and extends over the entire rear region of the casing (1).

2. Magazine for magneto-optical storage media for a modular mass storage system according to Claim 1,
**characterized**
- **in that** grooves (5) are disposed on both sides in the casing (1) in a horizontal plane,
- **in that** the grooves (5) serve to guide the magazine drawers (3) in the casing (1) and
- **in that** the grooves (5) are coated with a friction-reducing material in order to reduce the coefficient of friction between the grooves (5) and the magazine drawers (3).

3. Magazine for magneto-optical storage media for a modular mass storage system according to Claim 1 or 2,
**characterized**
- **in that** there are provided laterally on the casing (1) recesses (7) that serve to lock the casing (1) in the modular mass storage system,
- **in that** there is disposed laterally on the casing (1) a guide (8) that brings about a guidance of the casing (1) when the magazine for magneto-optical storage media is inserted in the modular mass store,
- **in that** there are present in the modular mass store counterpieces to the recesses (7) on the casing (1), in which counterpieces the recesses (7) latch when the casing (1) is pushed into the modular mass store, and
- **in that** a groove is present in the modular mass store in which groove the guide (8) of the magazine for magneto-optical storage media slides when the magazine for magneto-optical storage media is inserted into the modular mass store.

4. Magazine for magneto-optical storage media for a modular mass storage system according to any one of Claims 1 to 3,
**characterized**
**in that** the guide (8) is block-shaped and is parabolically bevelled in the direction of insertion into the modular mass store.

5. Magazine for magneto-optical storage media for a modular mass storage system according to any one of Claims 1 to 4,
**characterized**
- **in that** the casing (1) has bores (9) and the magazine drawers (3) have bores (10),
- **in that** said bore (9) and (10) have the same diameter,
- **in that** the centres of the bores (9) and (10) are disposed centrically one above the other in the state of the magazine drawers (3) pushed into the casing (1),
- **in that** bolts that bring about a locking of the magazine drawers (3) in the casing (1) are pushed in through the bores (9) and (10), and
- **in that**, with the bolts pushed in, the magneto-optical storage media that are situated in the magazine drawers (3) are protected against falling out of the same during the transportation of the magazine for magneto-optical storage media.

6. Magazine for magneto-optical storage media for a modular mass storage system according to any one of Claims 1 to 5,
**characterized**
- **in that** the magazine drawers (3) have a depression in which a round web (12) is disposed that is bevelled towards the centre,
- **in that** a magneto-optical storage medium placed in a magazine drawer (3) comes to rest on said round web (12),
- **in that** the magazine drawers (3) have, on the rear side, recesses (13) that match the recess (11) on the casing (1) in a shape-locked way,
- **in that** the magazine drawers (3) have longitudinal webs (16) that serve as counterpieces to the grooves (5) of the casing (1),
- **in that** the longitudinal webs (16) are coated with a friction-reducing material, and
- **in that** the magazine drawers (3) have a lug (19) that comes up against a web in the casing (1) when the magazine drawers (3) are pulled out and this prevents the magazine drawers (3) from being able to be completely pulled out of the casing (1).

7. Magazine for magneto-optical storage media for a modular mass storage system according to any one of Claims 1 to 6,
**characterized**
**in that** the friction-reducing material is Teflon.

8. Magazine for magneto-optical storage media for a modular mass storage system according to any one of Claims 1 to 7,
**characterized**
- **in that** a guide rail (2) is mounted laterally in each case on the lower part of the casing (1) on both sides and
- there is present in each case in the modular mass store a groove in which the guide rail (2) is inserted and is guided therein into the modular mass storage system.

9. Magazine for magneto-optical storage media for a modular mass storage system according to any one of Claims 1 to 8
**characterized**
**in that** the magneto-optical storage media are compact discs.

## Revendications

1. Magasin de supports de données magnéto-optiques pour un système modulaire de stockage en série, dans lequel le magasin de disques compacts est muni d'un boîtier (1), plusieurs tiroirs de stockage (3) sont agencés dans le boîtier (1) en superposition horizontale et à même distance les uns des autres, les tiroirs de stockage (3) sont prévus pour recevoir directement un support de données magnéto-optique, les tiroirs de stockage (3) comportant chacun un bec (4) permettant de saisir les tiroirs de stockage (3) au moyen d'une pince pour les tirer hors du boîtier (1) et/ou les insérer dans le boîtier (1), ces becs (4) s'avançant en saillie sur un côté hors du boîtier (1), les tiroirs de stockage (3) pouvant être extraits hors du boîtier (1) et insérés dans le boîtier (1) et les tiroirs de stockage (3), en position insérée, forment avec le boîtier (1) une face frontale uniformément fermée, le boîtier (1) étant muni d'une poignée (6),
**caractérisé**
- **en ce que** le boîtier (1) comporte sur la face arrière la poignée (6) et un creux (11),
- **en ce que** la poignée (6) est assemblée par conjugaison de forme avec le boîtier (1),
- **en ce que** la poignée (6) est située à fleur de la face arrière du boîtier (1),
- **en ce que** le creux (11) est réalisé en forme de segment de cercle et s'étend sur toute la partie arrière du boîtier (1).

2. Magasin de supports de données magnéto-optiques pour un système modulaire de stockage en série selon la revendication 1, **caractérisé**
- **en ce que** des rainures (5) sont agencées dans un plan horizontal sur les deux côtés à l'intérieur du boîtier (1),
- les rainures (5) sont destinées à guider les tiroirs de stockage (3) à l'intérieur du boîtier (1), et
- **en ce que** les rainures (5) sont revêtues d'un matériau destiné à réduire le frottement, afin de diminuer le coefficient de frottement entre les rainures (5) et les tiroirs de stockage (3).

3. Magasin de supports de données magnéto-optiques pour un système modulaire de stockage en série selon la revendication 1 ou 2, **caractérisé**
- **en ce qu'**il est prévu sur les deux côtés du boîtier (1) des creux (7) qui sont destinés à bloquer le boîtier (1) dans le système modulaire de stockage en série,
- **en ce que** sur les deux côtés du boîtier (1) est agencé un guidage (8), qui assure le guidage du boîtier (1) au moment de l'introduction du magasin de supports de données magnéto-optiques dans le système modulaire de stockage en série,
- **en ce que** dans le système modulaire de stockage en série sont prévues des pièces complémentaires aux creux (7) dans le boîtier (1), dans lesquelles viennent s'engager les creux (7) au moment de l'introduction du boîtier (1) dans le système modulaire de stockage en série, et
- **en ce que** dans le système modulaire de stockage en série est réalisée une rainure, dans laquelle glisse le guidage (8) du magasin de supports de données magnéto-optiques au moment de l'introduction du magasin de supports de données magnéto-optiques dans le système modulaire de stockage en série.

4. Magasin de supports de données magnéto-optiques pour un système modulaire de stockage en série selon l'une quelconque des revendications 1 à 3,
**caractérisé en ce que** le guidage (8) a une forme parallélépipédique et est aplati de manière parabolique dans le sens d'introduction dans le système modulaire de stockage en série.

5. Magasin de supports de données magnéto-optiques pour un système modulaire de stockage en série selon l'une quelconque des revendications 1 à 4, **caractérisé**
- **en ce que** le boîtier (1) comporte des forures (9) et les tiroirs de stockage (3) comportent des forures (10),
- **en ce que** lesdites forures (9) et (10) ont le même diamètre,
- **en ce que**, dans la position insérée des tiroirs de stockage (3) dans le boîtier (1), les centres des forures (9) et (10) sont superposés de manière centrée,
- **en ce que** des boulons sont enfichés dans les forures (9) et (10) pour assurer un blocage des tiroirs de stockage (3) à l'intérieur du boîtier (1), et
- **en ce que**, en position enfichée des boulons, les supports de données magnéto-optiques, posés dans les tiroirs de stockage (3), sont protégés de manière à ne pas tomber hors de ceux-ci pendant le transport du magasin de supports de données magnéto-optiques.

6. Magasin de supports de données magnéto-optiques pour un système modulaire de stockage en série selon l'une quelconque des revendications 1 à 5, **caractérisé**
- **en ce que** les tiroirs de stockage (3) comportent une cavité, dans laquelle est agencé un support rond (12) qui est aplati vers le centre,
- **en ce qu'**un support de données magnéto-optique posé dans un tiroir de stockage (3) repose sur ce support rond (12),
- **en ce que** les tiroirs de stockage (3) comportent des creux (13) sur leur face arrière qui coïncident par conjugaison de forme avec le creux (11) dans le boîtier (1),
- **en ce que** les tiroirs de stockage (3) comportent des barrettes longitudinales (16) qui font fonction de pièces complémentaires aux rainures (5) du boîtier (1),
- **en ce que** les barrettes longitudinales (16) sont revêtues d'un matériau destiné à réduire le frottement, et
- **en ce que** les tiroirs de stockage (3) comportent un bec (19), qui vient buter contre une nervure à l'intérieur du boîtier (1) au moment de l'extraction des tiroirs de stockage (3) et qui empêche ainsi que les tiroirs de stockage (3) puissent être extraits entièrement hors du boîtier (1).

7. Magasin de supports de données magnéto-optiques pour un système modulaire de stockage en série selon l'une quelconque des revendications 1 à 6,
**caractérisé en ce que** le matériau destiné à réduire le frottement est le téflon.

8. Magasin de supports de données magnéto-optiques pour un système modulaire de stockage en série selon l'une quelconque des revendications 1 à 7, **caractérisé**
- **en ce qu'**un rail de guidage (2) est agencé latéralement de part et d'autre de la partie inférieure du boîtier (1), et
- **en ce qu'**il est prévu respectivement une rainure dans le système modulaire de stockage en série, dans laquelle s'insère le rail de guidage (2), qui est guidé dans celle-ci dans le système modulaire de stockage en série.

9. Magasin de supports de données magnéto-optiques pour un système modulaire de stockage en série selon l'une quelconque des revendications 1 à 8,
**caractérisé en ce que** les supports de données magnéto-optiques sont des disques compacts.
